## Europäisches Patentamt

## European Patent Office

## Office européen des brevets

(11) Veröffentlichungsnummer: **0 191 719**
**B1**

(12) # EUROPÄISCHE PATENTSCHRIFT

(45) Veröffentlichungstag der Patentschrift:
**31.05.89**

(51) Int. Cl.⁴: **H01H 71/08, H02B 1/18**

(21) Anmeldenummer: **86730012.1**

(22) Anmeldetag: **28.01.86**

(54) **Niederspannungs-Leistungsschalter mit einem Stromwandler.**

(30) Priorität: **07.02.85 DE 3504423**

(43) Veröffentlichungstag der Anmeldung:
**20.08.86 Patentblatt 86/34**

(45) Bekanntmachung des Hinweises auf die Patenterteilung:
**31.05.89 Patentblatt 89/22**

(84) Benannte Vertragsstaaten:
**DE FR GB IT SE**

(56) Entgegenhaltungen:
**EP-A- 0 068 934**
**EP-A- 0 071 385**
**US-A- 3 584 170**

(73) Patentinhaber: **Siemens Aktiengesellschaft Berlin und München, Wittelsbacherplatz 2, D-8000 München 2(DE)**

(72) Erfinder: **Bohnen, Peter, Ing.grad., Solmsstrasse 22, D-1000 Berlin 61(DE)**
Erfinder: **Kugler, Reinhard, Dipl.-Ing., Maffeistrasse 22, D-1000 Berlin 49(DE)**
Erfinder: **Prietzel, Günter, Ing.grad., Beerwinkel 39a, D-1000 Berlin 20(DE)**

ACTORUM AG

## Beschreibung

Die Erfindung betrifft einen mehrpoligen Niederspannungs-Leistungsschalter mit oberen und unteren Anschlußschienen zur Verbindung der Kontaktanordnungen jedes Poles mit einem Stromkreis, ferner mit einem zwischen Seitenwänden angeordneten isolierenden, abgewinkelten Träger für die Kontaktanordnungen und Anschlußschienen aller Pole sowie mit einem je Pol vorgesehenen Stromwandler, der eine Anschlußschiene umschließt.

Durch die abgewinkelte Form des Trägers beim Leistungsschalter nach der US-A 3 584 170 weisen die rückseitigen Anschlußschienen des Leistungsschalters ungleiche Längen auf. An der längeren, von dem Stromwandler umschlossenen Anschlußschiene greifen daher die an den Anschlußstellen wirksamen Kräfte mit einem größeren Hebelarm an. Dies kann zu einer zu hohen Beanspruchung des Anschlußschienen und des Trägers der Kontaktanordnungen führen. Starken Beanspruchungen sind die Anschlußschienen insbesondere durch Kurzschlüsse ausgesetzt sowie durch mechanische Spannkräfte, die beim Einbau des Leistungsschalters in eine Schaltanlage und durch die Verbindung der schalterseitigen Anschlußschienen mit den anlagenseitigen weiterführenden Stromschienen entstehen.

Die Festigkeit im Bereich der Anschlußschienen, die mit dem Stromwandler versehen sind, könnte durch Einbettung der Stromwandler in den Werkstoff des Trägers der Kontaktanordnungen erreicht werden, wodurch die ungestützte Länge der von dem Stromwandler umschlossenen Anschlußschiene verkürzt wird. Dann könnte allerdings der Stromwandler nicht mehr ausgewechselt werden, wie dies für den ungehinderten Einsatz der Leistungsschalter in der Praxis verlangt wird.

Bei dem Leistungsschalter gemäß der EP-A 0 071 385 wird die geforderte Auswechselbarkeit der Stromwandler und zugleich die gewünschte Festigkeit im Bereich der Anschlußschienen durch Verstärkungsleisten erreicht, die in paarweiser vertikaler Anordnung jeweils die Anschlußschienen eines Poles übergreifen. Die insgesamt sechs Versteifungsleisten liegen parallel zu Seitenwänden, welche die Anschlußschienen und die Kontaktanordnungen eines Poles zwischen sich aufnehmen. Diese Anordnung wird durch Spannbolzen zusammengehalten, die sich durch den Leistungsschalter erstrecken und sich an den äußeren, aus Blech bestehenden Seitenwänden abstützen.

Der Erfindung liegt in diesem Zusammenhang die Aufgabe zugrunde, eine leicht auswechselbare Anordnung der Stromwandler zu schaffen und die ebenfalls erwünschte hohe Festigkeit im Bereich der Anschlußschienen mit möglichst einfachen Mitteln zu verwirklichen.

Zur Lösung der Aufgabe sieht die Erfindung folgende Merkmale vor:

Der Stromwandler ist unabhängig von der zugehörigen Anschlußschiene an einer die Seitenwände verbindenden Traverse stehend abgestützt;

zwischen die oberen und unteren Anschlußschienen ist lösbar ein Isolierstück mit Gewindelöschern für Klemmschrauben der Anschlußschienen eingefügt;

das Isolierstück bildet zusammen mit dem abgewinkelt ausgebildeten Träger eine Tasche zur Aufnahme des dem ortsfest abgestützten Teil gegenüberliegenden Bereiches des Stromwandlers.

Diese Anordnung zeichnet sich durch einen vorwiegend horizontal ausgerichteten Aufbau aus, wobei die Anzahl der benötigten Isolierteile stark verringert ist. Die zur Abstützung der Stromwandler benutzte Traverse kann ein ohnehin benötigter Bestandteil des Tragwerkes des Leistungsschalters sein. Die Stromwandler werden auf diese Weise unabhängig von den Anschlußschienen befestigt, so daß die Anschlußschienen frei durch die Stromwandler hindurchtreten können.

Jeder Stromwandler kann einen rechteckigen Eisenkern sowie zwei gleiche Spulenkörper aufweisen, die in symmetrischer Anordnung Ansatzstellen für Fußteile besitzen, wobei die Ansatzstellen der Spulenkörper und die Fußteile mit zusammenwirkenden Vorsprüngen bzw. Hinterschneidungen versehen sind. Dies hat den Vorteil, daß der Spulenkörper für zwei Wicklungen des Stromwandlers aus Teilkörpern der halben Größe zusammensetzbar ist, deren Form dadurch vereinfacht ist, daß die vollständigen Fußteile fehlen. Diese lassen sich einfacher als kleine Einzelteile herstellen, die an den Ansatzstellen der Spulenkörper angebracht werden. Auf diese Weise gelangt man zu einer für die Montage vorteilhaften stehenden Befestigung der Stromwandler, derart, daß ein Stromwandler auf die erwähnte Traverse gestellt und an dieser befestigt wird. Dies kann nach einer Weiterbildung der Erfindung dadurch erleichtert sein, daß die an dem Leistungsschalter rückseitig angeordnete Traverse von unten zugängliche Löcher für an dem Stromwandler bzw. den Fußteilen angreifende Befestigungselemente besitzt. Anschließend wird das für alle Pole gemeinsame Isolierstück eingefügt, wodurch die Tasche vervollständigt wird, in die jeder Stromwandler mit seinem der Befestigungsstelle an der Traverse gegenüberliegenden Teil, d.h. mit seinem oberen Spulenkörper eingreift.

Das Isolierstück kann mit dem Träger der Kontaktanordnungen verschraubt sein. In bestimmten Fällen kann es jedoch günstiger sein, wenn das Isolierstück an den Seitenwänden des Leistungsschalters mit frei zugänglichen Befestigungselementen lösbar befestigt ist.

Die Erfindung wird im folgenden anhand des in den Figuren dargestellten Ausführungsbeispiels näher erläutert.

Die Figur 1 zeigt einen Leistungsschalter im Schnitt.

In der Figur 2 ist der Leistungsschalter von der Rückseite gezeigt, wobei beidseitig einer strichpunktiert eingezeichneten Mittellinie unterschiedlich Ausführungen eines zwischen die Anschlußschienen eingefügten Isolierstückes dargestellt sind.

Die Figur 3 ist eine Seitenansicht eines Stromwandlers und anschliessender Teil eines Leistungsschalter.

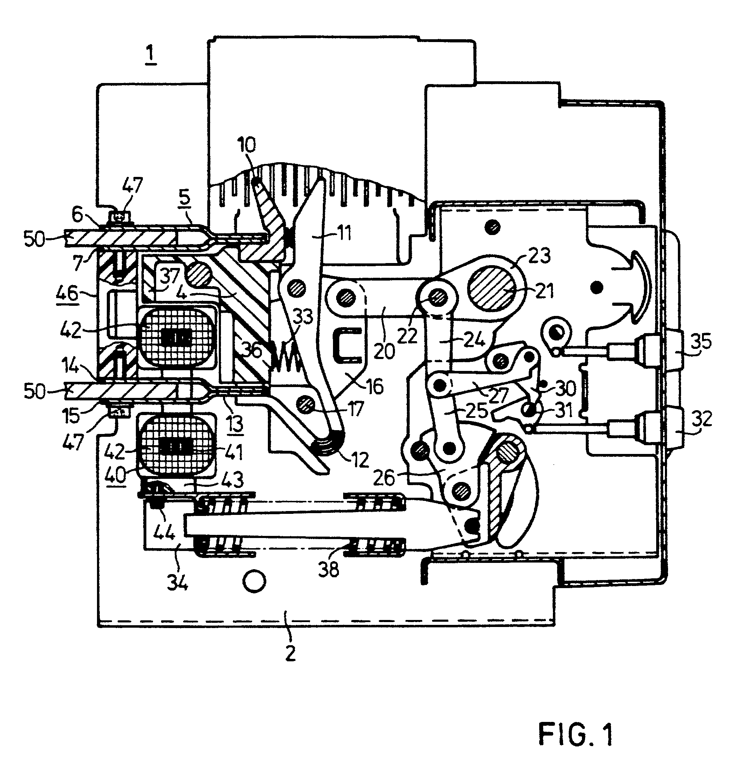

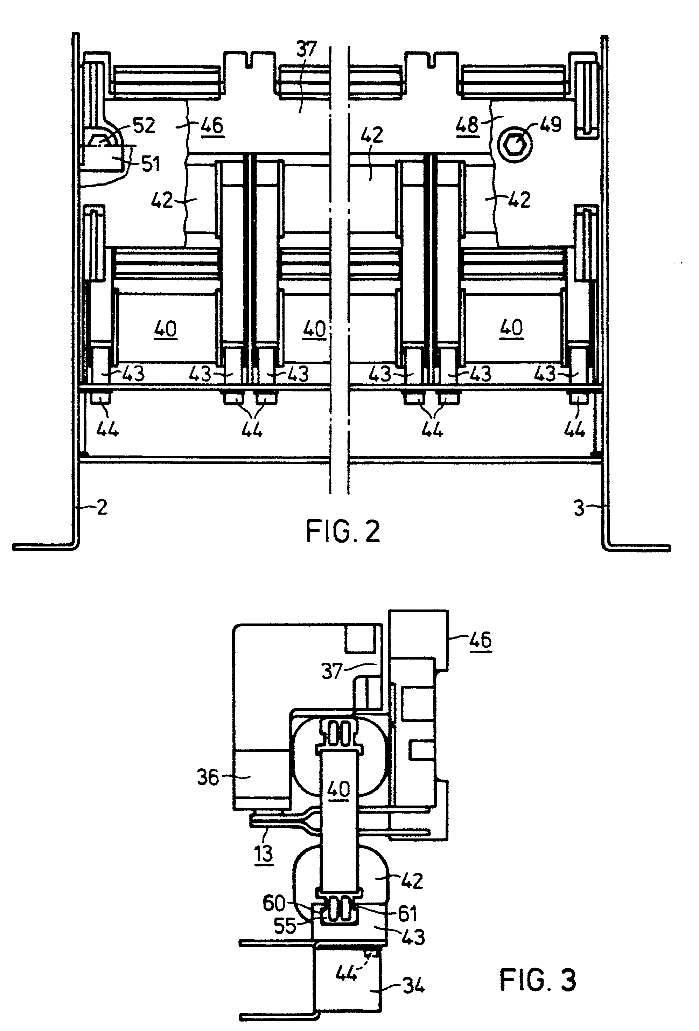

Der in der Figur 1 gezeigte Niederspannungs-Leistungsschalter 1 ist im Schnitt eines Poles und des Schaltschlosses vereinfacht dargestellt. Der Leistungsschalter 1 weist als tragende Bestandteile zwei Seitenwände 2 und 3 auf, von denen die eine Seitenwand 2 in die Figur 1 sichtbar ist, während beide Seitenwände 2 und 3 in der Figur 2 gezeigt sind. Zwischen den Seitenwänden 2 und 3 erstreckt sich ein isolierender Träger 4 für drei benachbarte Kontaktanordnungen. Die Strombahn jedes Poles umfaßt dabei ausgehend von einer oberen, gegabelten Anschlußschiene 5 mit Teilschienen 6 und 7 ein feststehendes Schaltstück 10, einen beweglichen Schalthebel 11, ein biegsames Stromband 12 sowie eine untere Anschlußschiene 13, die gleichfalls aus Teilschienen 14 und 15 zusammengesetzt ist. Der Kontakthebel 11 ist gelenkig an einem Kontaktträger 16 gelagert, der um ein ortsfestes Drehlager 17 schwenkbar ist. An dem Kontaktträger 16 greift unter Zwischenschaltung einer Koppelstange 20 eine in den Seitenwänden 2 und 3 gelagerte Schaltwelle 21 an. An dem Verbindungsgelenk 22 zwischen der Schaltwelle 21 bzw. einem auf dieser sitzenden Hebel 23 und der Koppelstange 20 greift eine Kniehebelanordnung aus drei gelenkig miteinander verbundenen Kniehebeln 24, 25 und 26 an, die in der dargestellten Einschaltstellung des Leistungsschalters durch einen Stützhebel 27 und einen Klinkenhebel 30 an einer Halbwelle 31 abgestützt ist. Eine Drehung der Halbwelle 31 durch einen nicht dargestellten Auslöser oder von Hand durch eine Drucktaste 32 hebt die Abstützung des Kniehebelssystems auf und veranlaßt dessen Einknicken. Der Kontaktträger 16 und der Kontakthebel 11 nehmen dann unter dem Einfluß einer Druckfeder 33 die Ausschaltstellung ein.

Die zum Einschalten benötigte Energie wird in nicht näher dargestellter Weise durch Spannen einer oder mehrerer Schraubendruckfedern 38 gespeichert, die sich mit ihrem einen Ende an einer die Seitenwände 2 und 3 verbindenden Traverse 34 abstützt und die mit ihrem anderen Ende auf den unteren Kniehebel 26 einwirkt. Die gespannten Druckfedern 38 ist in an sich bekannter Weise verriegelbar, wobei zur Freigabe dieser Verriegelung und damit zum Einschalten des Leistungsschalters eine weitere Drucktaste 35 vorgesehen ist.

Wie die Figur 1 ferner zeigt, ist der aus einem Isolierstoff bestehende Träger 4 abgewinkelt ausgeführt, wobei der eine Schenkel 36 der Winkelform Befestigungsmittel zur schalterseitigen Festlegung der Anschlußschienen 5 und 13 besitzt. Der weitere Schenkel 37 des Träger 4 ist so bemessen, daß er etwa der in der Längsrichtung der Anschlußschienen liegenden Abmessung eines Stromwandlers 40 entspricht. Dieser weist einen Eisenkern 41 auf, der einen aus zwei Teilkörpern 42 bestehenden Spulenkörper trägt.

Der Stromwandler 40 umgibt die untere Anschlußschiene 13 des Leistungsschalters 1 mit Abstand und ist unabhängig von dieser Anschlußschiene abgestützt. Wie der Figur 2 zu entnehmen ist, sind entsprechend der dreipoligen Ausführung des Leistungsschalters 1 drei gleiche Stromwandler 40 vorgesehen. Der untere Teilspulenkörper 42 jedes dieser Stromwandler ist mit Fußteilen 43 versehen. Mit diesen ruhen die Stromwandler auf der Traverse 34, in der sich nicht gezeigte Durchgangslöcher für je eine Befestigungsschraube 44 für jedes Fußteil 43 befinden. Die Traverse 34 ist dabei, wie insbesondere die Figuren 1 und 3 zeigen, so ausgeführt, daß von unten ungehinderter Zugang zu den Befestigungsschrauben 44 besteht.

Die weitere Festlegung der Stromwandler 40 erfolgt an ihrem des Fußteilen 43 gegenüberliegenden Teil, d. h. im Bereich den oberen Teilspulenkörpers 42. Hierzu dient ein Isolierstück 46, das zwischen die Anschlußschienen 5 und 13 eingefügt ist. Das Isolierstück 46 ist in der Figur 1 teilweise geschnitten gezeigt, um in das Isolierstück eingreifende Klemmschrauben 47 sichtbar zu machen, die zur Verbindung weiterführenden Stromschienen 50 mit den Anschlußschienen 5 und 13 vorgesehen sind. Die Anschlußschienen 50 sind in der Figur 1 abgebrochen dargestellt und werden von den Teilschienen 6 und 7 bzw. 14 und 15 übergriffen. Wie man erkennt, bildet das Isolierstück 46 eine stabile Versteifung der Anschlußschienen 5 und 13. Zugleich legt es mit geringer Toleranz den Stromwandler 40 fest.

In dem Beispiel gemäß der Figur 1 ist zwischen dem Isolierstück 46 und dem oberen Schenkel 37 des Trägers 4 ein Abstand zu erkennen. Dieser beruht darauf, daß das Isolierstück 46 nicht mit dem Träger 4 direkt verbunden ist, sondern an seinen Enden mit Widerlagern der Seitenwände 2 und 3 verschraubt ist, wie dies in dem linken Teil der Figur 2 dargestellt ist. Hier ist ein aus der einen Seitenwand herausgebogenes Auflager mit 51 und eine Verbindungsschraube mit 52 bezeichnet. Diese Anordnung ist sinngemäß an beiden Seitenwänden 2 und 3 vorgesehen.

Als weitere Möglichkeit zur Befestigung eines Isolierstückes ist in dem rechten Teil der Figur 2 die Verbindung mit dem Träger 4 gezeigt. Hierzu wird das Isolierstück 48 mit Schrauben 49 an dem Schenkel 37 befestigt. Dieser ist mit nicht gezeigten Schraubenlöchern, beispielsweise jeweils in der Mitte jedes Poles, versehen. In diesem Fall entfällt der in der Figur 1 gezeigte und bereits erwähnte Zwischenraum zwischen dem Schenkel 37 und dem Isolierstück 46. Der Abstand zwischen dem Isolierstück 48 und dem Schenkel 36 des Trägers 4 ist jedoch entsprechend den Abmessungen des Stromwandlers 40 zu bemessen.

Wie bereits erwähnt, enthält der Stromwandler 40 einen Eisenkern 41 sowie zwei Teilspulenkörper 42. Diese sind gemäß der Figur 3 mit Ansatzstellen 55 für die Fußteile 43 versehen und können somit wahlweise als oberer oder unterer Teilspulenkörper eingesetzt werden, wobei jeweils die eine Ansatzstelle unbenutzt bleibt. Die Ansatzstellen 55 sind mit Hinterschneidungen 60 versehen, die Vorsprüngen 61 der Fußteile 43 entsprechen. Auf diese Weise lassen sich die Fußteile 43 formschlüssig an den Spulenkörpern verankern.

## Patentansprüche

1. Mehrpoliger Niederspannungs-Leistungsschalter (1) mit folgenden Merkmalen:
– obere und untere Anschlußschienen (5, 13) zur Verbindung der Kontaktanordnungen (10, 11) jedes Poles mit einem Stromkreis,
– ein zwischen Seitenwänden (2, 3) angeordneter isolierender, abgewinkelter Träger (4) für die Kontaktanordnungen (10, 11) und Anschlußschienen (5, 13) aller Pole,
– ein je Pol vorgesehener Stromwandler (40), der eine Anschlußschiene (13) umschließt, gekennzeichnet durch folgende weitere Merkmale:
– der Stromwandler (40) ist unabhängig von der zugehörigen Anschlußschiene (13) an einer die Seitenwände (2, 3) verbindenden Traverse (34) stehend abgestützt,
– zwischen die oberen und unteren Anschlußschienen (5, 13) ist lösbar ein Isolierstück (46) mit Gewindelöchern (48) für Klemmschrauben (47) der Anschlußschienen (5, 13) eingefügt,
– das Isolierstück (46) bildet zusammen mit dem abgewinkelt ausgebildeten Träger (4) eine Tasche zur Aufnahme des dem ortsfest abgestützten Teil gegenüberliegenden Bereiches (42) des Stromwandlers (40).

2. Niederspannungs-Leistungsschalter nach Anspruch 1, dadurch gekennzeichnet, daß der Stromwandler (40) einen rechteckigen Eisenkern (41) sowie zwei gleiche Spulenkörper (42) aufweist, die in symmetrischer Anordnung Ansatzstellen (55) für Fußteile (45) besitzen, wobei die Ansatzstellen (55) der Spulenkörper (42) und die Fußteile (43) mit zusammenwirkenden Vorsprüngen bzw. Hinterschneidungen (60, 61) versehen sind. (Figur 3)

3. Niederspannungs-Leistungsschalter nach Anspruch 1 oder 2, dadurch gekennzeichnet, daß die Traverse (34) des Leistungsschalters (1) an dessen Rückseite von unten zugängliche Löcher für an dem Stromwandler bzw. den Fußteilen (43) angreifende Befestigungselemente (Schrauben 44) besitzt. (Figur 4)

4. Niederspannungs-Leistungschalter nach Anspruch 1, dadurch gekennzeichnet, daß das Isolierstück (46) an den Seitenwänden (2, 3) des Leistungsschalters (1) mit frei zugänglichen Befestigungselementen (Schrauben 52; 49) lösbar befestigt ist (Figur 2).

## Claims

1. Multipole low voltage circuit-breaker (1) having the following features:
– upper and lower connection rails (5, 13) for the purpose of connecting the contact arrangements (10, 11) of each pole with an electric circuit,
– an insulating, angular carrier (4), which is arranged between side walls (2, 3), for the contact arrangements (10, 11) and connection rails (5, 13) of all the poles,
– a current transformer (40) provided per pole and surrounding a connection rail (13), characterised by the following features:
– the current transformer (40) is supported, independently of the pertinent connection rail (13), standing on a cross-member (34) connecting the side walls (2, 3).
– inserted between the upper and lower connection rails (5, 13) in a detachable manner there is an insulating piece (46) with threaded holes (48) for clamping screws (47) of the connection rails (5, 13),
– the insulating piece (46), together with the angularly constructed carrier (4), forms a pocket for receiving the region (42) of the current transformer (40) lying opposite the fixedly supported part.

2. Low voltage circuit-breaker according to claim 1, characterised in that the current transformer (40) has a rectangular iron core (41) and also two identical coil bodies (42) which have, in symmetrical arrangement, lugs (55) for foot parts (45), the lugs (55) of the coil bodies (42) and the foot parts (43) being provided with cooperating projections or undercuts (60, 61). (Figure 3)

3. Low voltage circuit-breaker according to claim 1 or 2, characterised in that the cross-member (34) of the circuit-breaker (1) has, on the latter's rearside, holes which are accessible from below for securing elements (screws 44) which act on the current transformer or the foot parts (43). (Figure 4)

4. Low voltage circuit-breaker according to claim 1, characterised in that the insulating piece (46) is secured in a detachable manner to the side walls (2, 3) of the circuit-breaker (1) with freely accessible securing elements (screws (52; 49). (Figure 2).

## Revendications

1. Disjoncteur de puissance multipolaire basse tension (1) présentant les caractéristiques suivantes:
– des barres supérieure et inférieure de raccordement (5, 13) servant à relier des dispositifs à contacts (10, 11) de chaque pôle à un circuit électrique,
– un support coudé isolant (4), disposé entre des parois latérales (2, 3) et servant à supporter les dispositifs à contacts (10, 11) et les barres de raccordement (5, 13) de tous les pôles,
– un transformateur d'intensité (40) prévu pour chaque pôle et entourant une barre de raccordement (13), remarquable par les caractéristiques additionnelles suivantes:
– le transformateur d'intensité (40) est soutenu verticalement sur une traverse (34) reliant les parois latérales (2, 3), indépendamment de la barre de raccordement (13) associée,
– entre les barres supérieure et inférieure de raccordement (5, 13) est inséré, de façon amovible, une pièce isolante (46) comportant des trous taraudés (48) prévus pour des vis de serrage (47) des barres de raccordement (5, 13),
– la pièce isolante (46) forme, conjointement avec le support (4) de forme coudée, une poche destinée à recevoir la partie (42) du transformateur d'intensité (40), qui est située à l'opposé de la partie soutenue de façon fixe.

2. Disjoncteur de puissance basse tension suivant la revendication 1, caractérisé par le fait que le transformateur d'intensité (40) possède un noyau de fer (41) ainsi que deux corps de bobines identiques (42), qui possèdent, selon une disposition symétrique, des zones de montage (55) pour des pieds (43), les zones de montage (55) des corps de bobines (42) et les pieds (43) comportant des parties saillantes ou des parties en dépouille (60, 61), qui coopèrent entre elles. (figure 3).

3. Disjoncteur de puissance basse tension suivant la revendication 1 ou 2, caractérisé par le fait que la traverse (34) du disjoncteur de puissance (1) comporte, sur sa face arrière, des trous accessibles par le bas pour des éléments de fixation (vis 44) s'accrochant sur le transformateur d'intensité ou sur les pieds (43) (figure 4).

4. Disjoncteur de puissance basse tension suivant la revendication 1, caractérisé par le fait que la pièce isolante (46) est fixée, de façon amovible, sur les parois latérales (2, 3) du disjoncteur de puissance (1) à l'aide d'éléments de fixation (vis 52; 49) librement accessibles (figure 2).

FIG. 1

FIG. 2

FIG. 3